# EUROPÄISCHE PATENTANMELDUNG

(11) **EP 1 093 247 A2**
(43) Veröffentlichungstag der Anmeldung: **18.04.2001**
(21) Anmeldenummer: 00440270.7
(22) Anmeldetag: 11.10.2000
(51) Int. Cl.: H04J 3/16

(54) **Netzelement mit redundanter Schaltmatrix**

(30) Priorität: 15.10.1999 DE 19949996
(71) Anmelder: ALCATEL, 75008 Paris (FR)
(72) Erfinder: Kleine-Altekamp, Harald, 74343 Sachsenheim (DE); Heuer, Volkmar, 71254 Ditzingen (DE); Sigloch, Rainer, 71686 Remseck (DE)
(74) Vertreter: Urlichs, Stefan

(57) **Zusammenfassung**

Ein Netzelemente, wie z.B. ein digitaler Crossconnect, wird mit einer 1:1 Redundanz u.a. der Schaltmatrix ausgestattet, um dessen Funktionalität im Falle eines Hardwarefehlers aufrecht zu erhalten. Gegen Katastrophen wie Feuer, Explosion Hochwasser, bei der alle Geräte in einem Raum zerstört werden, kann die in bekannten Netzelementen verwendete Redundanz nicht schützen.

Um dem abzuhelfen, werden die ohnehin vorhandenen zwei Schaltmatrizen (21, 22) in getrennten Räumen (31, 32) installiert, d.h. ein einziges Netzelement wird auf zwei Räume aufgeteilt. Dazu werden die Schnittstellenschaltungen (23, 24) in zwei Gruppen eingeteilt und jeweils eine Gruppe wird einer Schaltmatrix zugeordnet. Eine Schaltmatrix mit einer Gruppe von Schnittstellenschaltungen wird z.B. in einem Schaltschrank oder Gestellrahmen zu einer Einheit angeordnet und die Einheiten werden untereinander mit einfachen internen Verbindungen (34) so verbunden, daß beide Schaltmatrizen (21, 22) jeweils mit allen Schnittstellenschaltungen (23, 24) verbunden sind.

## Beschreibung

Die Erfindung betrifft ein Netzelement insbesondere für ein synchrones digitales Nachrichtenübertragungsnetz wie SDH oder SONET nach dem Oberbegriff des Anspruchs 1.

Ein solches Netzelement ist aus dem Artikel von R. Castelli et al. "Technologie der SDH-Netzelemente: die Hardware-Plattform", Elektisches Nachrichtenwesen 4/1993, S.312-321 bekannt. In den dortigen Bildern 9 und 10 ist ein Crossconnect für ein synchrones digitales Nachrichtenübertragungsnetz der Synchronen Digitalen Hierarchie (SDH) dargestellt. Er weist eine Anzahl von Schnittstellenschaltungen und zwei Schaltmatrizen auf. Die Schaltmatrizen sind jeweils mit jeder der Schnittstellenschaltungen verbunden und dienen dazu, Pfade zwischen den Schnittstellenschaltungen zu schalten. Dabei arbeitet stets eine der Schaltmatrizen als aktive Schaltmatrix, die andere steht als Ersatzmatrix für einen Fehlerfall zur Verfügung. Eine Steuerungseinrichtung erkennt eine Fehlerbedingung der aktiven Schaltmatrix und schaltet die Ersatzmatrix als neue aktive Schaltmatrix um. Dadurch weist der Crossconnect eine 1:1 Redundanz auf, die gegen Hardwarefehler in der Schaltmatrix, dem Kernelement des Crossconnects, schützt. Für die Schnittstellenschaltungen kann zusätzlich eine 1:N Redundanz vorgesehen sein, so daß eine einzelne Ersatzschaltung für eine Anzahl N von Schnittstellenschaltungen zur Verfügung steht, um im Fehlerfall die Funktion einer ausgefallenen Schaltung zu übernehmen.

Es kann jedoch vorkommen, daß z.B. durch ein Feuer, eine Explosion oder eine Hochwasserkatastrophe alle Geräte in einem Raum zerstört werden und somit ausfallen. Gegen solch eine Katastrophe kann die in bekannten Netzelementen verwendete Redundanz nicht schützen, da gleichzeitig alle Schaltkreise des Netzelementes von der Katastrophe betroffen sind.

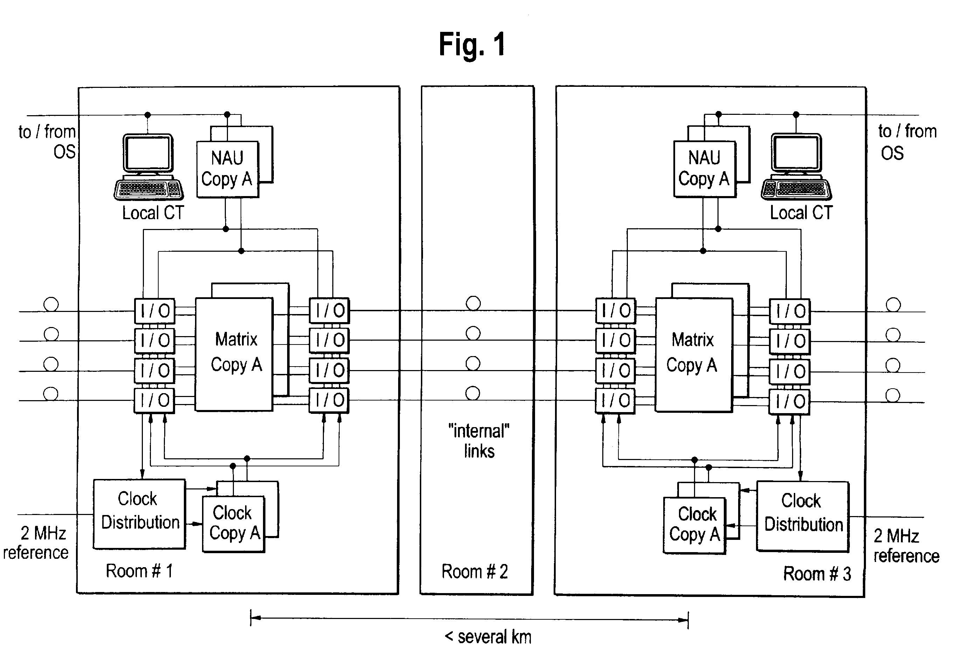

Um vor einer solchen Katastrophe zu schützen ist es bekannt, zwei gleichartige Netzelemente in zwei getrennten Räumen aufzubauen und untereinander zu verbinden. Fällt ein Netzelement aus, so kann zumindest ein Teil des Verkehrs, z.B. priorisierter Verkehr wie Notrufnummern, noch über das zweite Netzelement abgewickelt werden. Ein solcher Aufbau ist in Figur 1 dargestellt. Nachteilig sind hierbei jedoch die hohen Investitionskosten in zwei vollständige Geräte und die Größe der Schaltmatrizen, die benötigt werden, damit die Netzelemente auch im Falle von Schutzschaltungen wie MSP (Multiplexer Section Protection) und SNCP (Subnetwork Connection Protection) vollständig blockierungsfrei arbeiten.

Aufgabe der Erfindung ist es, ein Netzelement anzugeben, das mit weniger Hardware auskommt als bisher und kostengünstiger zu realisieren ist und dabei dennoch zumindest teilweisen Schutz gegen große Katastrophen wie Feuer, Explosion oder Überschwemmung bietet, die alle in einem Raum aufgestellten Geräte zerstören. Die Aufgabe wird gelöst durch die Merkmale des Anspruchs 1. Vorteilhafte Ausgestaltungen sind den abhängigen Ansprüchen zu entnehmen.

Die Erfindung wird im folgenden anhand der Figuren 2 bis 5 in einem Ausführungsbeispiel erläutert. Es zeigt:
Figur 1: Eine bekannte Schutzschaltung mit zwei räumlich getrennten, untereinander verbundenen Netzelementen,
Figur 2: ein erfindungsgemäßes Netzelement, das in zwei getrennten Räumen installiert ist,
Figur 3: das Netzelement aus Figur 2 bei einem Feuer im ersten Raum,
Figur 4: das Netzelement aus Figur 2 bei einem Feuer im zweiten Raum, und
Figur 5: das Netzelement aus Figur 2 bei einer Explosion im Bereich der internen Verkabelung.

Eine Grundidee der Erfindung besteht darin, die ohnehin vorhandenen zwei Schaltmatrizen in getrennten Räumen zu installieren, d.h. ein einziges Netzelement wird auf zwei Räume aufgeteilt. Dazu werden die Schnittstellenschaltungen in zwei Gruppen eingeteilt und jeweils eine Gruppe wird einer Schaltmatrix zugeordnet. Eine Schaltmatrix mit einer Gruppe von Schnittstellenschaltungen wird z.B. in einem Schaltschrank oder Gestellrahmen zu einer Einheit angeordnet und die Einheiten werden untereinander mit einfachen internen Verbindungen so verbunden, daß beide Schaltmatrizen jeweils mit allen Schnittstellenschaltungen verbunden sind.

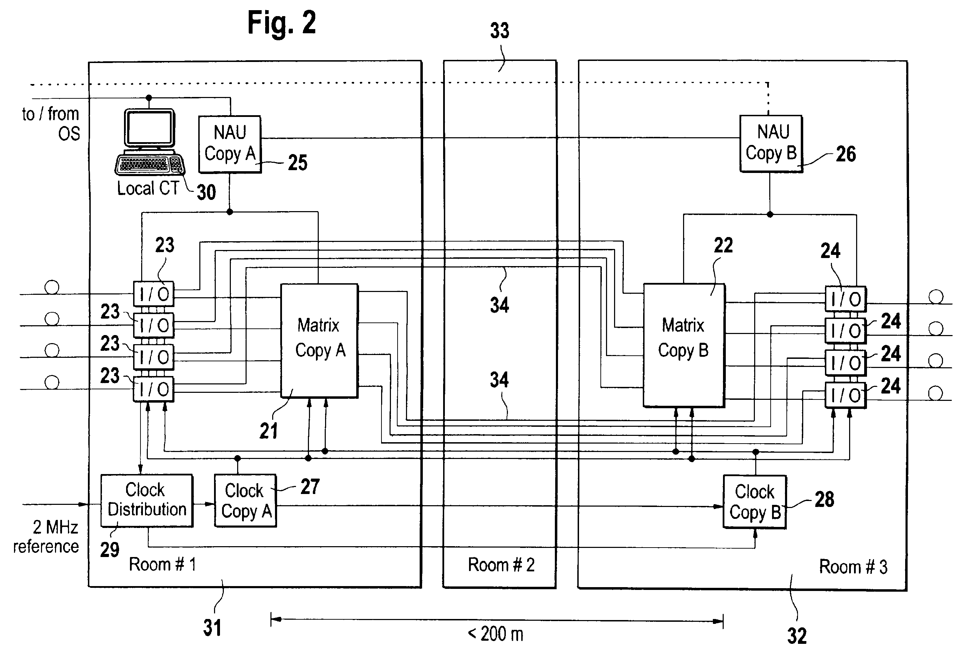

In Figur 2 ist ein solches erfindungsgemäßes Netzelement dargestellt. Es handelt sich um einen digitalen Crossconnect für ein synchrones digitales Nachrichtenübertragungsnetz, der die Aufgabe hat, feste Pfade für Datenübertragungen innerhalb des Netzes zu schalten. Kernelement des Crossconnects ist eine Schaltmatrix 21, 22, in der die Verbindungen zwischen Schnittstellenschaltungen 23, 24 geschaltet werden. Aus Redundanzgründen besitzt der Crossconnect zwei solcher Schaltmatrizen, die als Copy A 21 und Copy B 22 bezeichnet werden. Im Normalbetrieb, d.h. wenn kein Hardwarefehler vorliegt, arbeitet Copy A 21 als aktive Schaltmatrix und Copy B 22 steht als Ersatzmatrix für einen Fehlerfall zur Verfügung.

Der Crossconnect besitzt im Ausführungsbeispiel acht optische Schnittstellenschaltungen 23, 24 zum Anschluß von Lichtwellenleitern des Nachrichtenübertragungsnetzes. Die Schnittstellenschaltungen sind jeweils mit beiden Schaltmatrizen 21, 22 verbunden. An den Schnittstellenschaltungen werden Nachrichtensignale aus dem Nachrichtenübertragungsnetz empfangen und in das Netz gesendet. Es handelt sich um Zeitmultiplexsignale vom Typ STM-N (Synchrones Transport Modul, N= 1, 4, 8, 16, 64), die zu schaltende Nutzsignale enthalten. Die Nutzsignale sind gemäß einer Multiplexhierarchie in Container verpackt. Um einen Pfad in dem Netz zu schalten, werden einzelne dieser Container von der Schaltmatrix von einer empfangenden Schnittstellenschaltung zu einer sendenden Schnittstellenschaltung geschaltet, wo die Container wieder zu einem Transportrahmen zusammengefaßt und gesendet werden. In den Schnittstellenschaltungen werden die empfangenen Nachrichtensignale elektrisch gewandelt, entschachtelt und die darin enthaltenen Container werden den beiden Schaltmatrizen zugeleitet.

Erfindungsgemäß sind die Schnittstellenschaltungen in zwei Gruppen eingeteilt. Die erste Gruppe umfaßt die vier Schnittstellenschaltungen 23 in der Figur links und die zweite Gruppe umfaßt die vier Schnittstellenschaltungen 24 in der Figur rechts. Die erste Gruppe 23 und die erste, aktive Schaltmatrix 21 sind in einem ersten Gestellrahmen zu einer ersten Einheit angeordnet und in einem ersten Raum 31 (Room #1) installiert. Die zweite Gruppe 24 und die zweite, redundante Schaltmatrix 22 sind in einem zweiten Gestellrahmen zu einer zweiten Einheit angeordnet und in einem zweiten Raum 32 (Room #3) installiert. Die beiden Einheiten sind untereinander durch eine Vielzahl von internen Verbindungen 34 verbunden. Als interne Verbindungen 34 werden einfache, kurzreichweitige optische Verbindungen verwendet, die für eine maximale Lichtwellenleiterlänge von etwa 200 Metern ausgelegt sind. Solche einfachen und kostengünstigen optischen Verbindungen sind an sich bekannt und werden vielfach eingesetzt, z.B. um im LAN-Bereich Computer zu verbinden oder auch in der Inter-Rack-Kommunikation bei Netzelementen. Sie unterscheiden sich von den Verbindungen auf Netzebene dadurch, daß keine einmodigen Laser und Fasern benötigt werden und daß aufgrund der Kürze der Übertragungsstrecke (max. 200 m) keine Dispersionskompensation vonnöten ist. Alternativ können aber auch elektrische Verbindungen eingesetzt werden. Die internen Verbindungen 34 durchlaufen einen dritten Raum 33 (Room #2).

Der Crossconnect wird von einer ersten Steuerungseinrichtung 25 auf an sich bekannte Weise gesteuert. Die Steuerungseinrichtung ist mit einem lokalen Bedienterminal 30 verbunden, um den Crossconnect vor Ort installieren, warten und aufrüsten zu können. Außerdem ist die Steuerungseinrichtung 25 mit dem Netzwerkmanagementsystem des Nachrichtenübertragungsnetzes verbunden und empfängt über diese Verbindung Anweisungen betreffend die zu schaltenden Pfade. Die Steuerungseinrichtung steuert die aktive Schaltmatrix und gibt vor, welche Pfade von der Matrix geschaltet werden sollen. Alarme und Fehlermeldungen werden von den Schnittstellenschaltungen und der aktiven Schaltmatrix an die Steuerungseinrichtung gemeldet. Diese dient auch dazu, Fehlerzustände z.B. aufgrund eines Hardwarefehlers zu erkennen und im Fehlerfall auf eine Ersatzschaltung umzuschalten. Da eine 1:1 Redundanz der Schaltmatrizen vorgesehen ist, schaltet die Steuerungseinrichtung 25 im Falle eines Hardwarefehlers der aktiven Schaltmatrix 21 die zweite redundante Schaltmatrix 22 zur neuen aktiven Schaltmatrix um und deaktiviert die bisher aktive Matrix.

Die Steuerungseinrichtung besitzt eine Festplatte oder einen ähnlichen Massenspeicher, auf der Konfigurationsparameter des Crossconnects in Form einer Datenbank abgelegt sind und auf der auch Alarme und Meldungen der einzelnen Komponenten des Crossconnects abgespeichert werden und vom übergeordneten Managementsystem abgerufen werden können.

In einer vorteilhaften Weiterbildung der Erfindung sind zwei getrennte Steuerungseinrichtungen 25, 26 vorhanden, wobei jeweils eine Steuerungseinrichtung einer der Einheiten räumlich zugeordnet und im selben Raum wie diese installiert ist. Im Normalbetrieb arbeitet die erste Steuerungseinrichtung 25 als aktive Steuerung und die zweite Steuerungseinrichtung 26 steht als Ersatzsteuerung für einen Fehlerfall zur Verfügung. Die Steuerungseinrichtungen 25, 26 sind miteinander verbunden. Vorteilhaft besitzt auch die zweite Steuerungseinrichtung 26 eine Verbindung zum übergeordneten Netzwerkmanagemensystem des Nachrichtenübertragungsnetzes.

Der Crossconnect besitzt auch eine Taktversorgungsschaltung 27, die ihn mit einem interen Referenztakt versorgt. Die Taktversorgungsschaltung ist entweder auf einen externen 2 MHz Referenztakt synchronisiert oder auf ein von einem der an den Schnittstellenschaltungen empfangenen Nachrichtensignale abgeleitetes Taktsignal. Vorteilhaft besitzt der Crossconnect eine zweite, redundante Taktversorgungsschaltung 28 als Ersatzschaltung für einen Fehlerfall, wobei jeweils eine der Taktversorgungsschaltungen 27, 28 einer Einheit räumlich zugeordnet ist. Ein Verteiler 29 sorgt dafür, daß beide Taktversorgungsschaltungen auf denselben externen Referenztakt synchronisiert werden. Im Fehlerfall oder bei Störung der externen Referenztaktquelle können die beiden Taktversorgungsschaltungen auch im freien, unsynchronisierten Betrieb arbeiten ("hold-over").

Die redundanten Komponenten des Crossconnects, d.h. die zweite Schaltmatrix 22, die zweite Taktversorgung 28 und die zweite Steuerungseinrichtung 26, sind auch im Normalbetrieb funktionsbereit und führen dieselben Funktionen aus, wie ihre aktiven Gegenstücke. Die "standby"-Komponenten arbeiten also auch im Normalbetrieb. Lediglich ihre Ausgangssignale werden im Normalbetrieb von den aktiven Komponenten nicht ausgewählt sondern ignoriert. Dadurch ist gewährleistet, daß im Fehlerfall nur auf die ohnehin vorhandenen Ausgangssignale der "stand-by"-Komponenten umgeschaltet werden muß, indem diese von den übrigen Komponenten als aktiv ausgewählt werden.

Im folgenden soll nun beschrieben werden, wie sich eine Katastrophe wie Feuer, Explosion oder Hochwasser, bei der alle in einem Raum installierten Geräte ausfallen, auf den Betrieb des Crossconnects auswirkt.

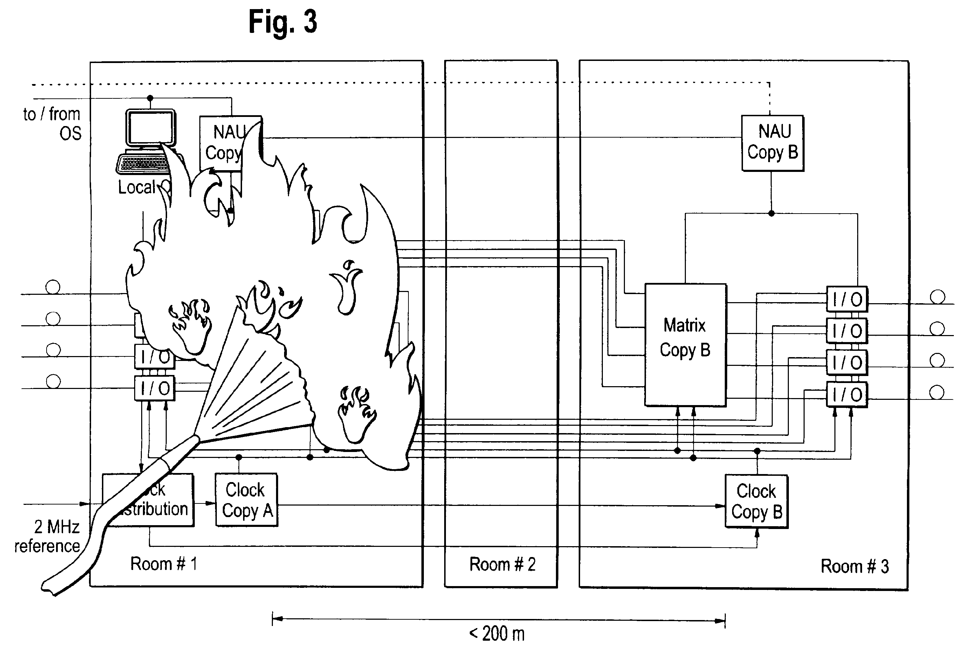

In Figur 3 ist gezeigt, daß ein Feuer alle Geräte im ersten Raum 31 zerstört. Als Folge des Feuers, geht aller Verkehr vom ersten Raum, d.h. alle Nachrichtensignale die im ersten Raum ankommen oder gesendet werden, verloren. Der Einfluß auf den Verkehr vom zweiten Raum 32 und die Steuerbarkeit des Crossconnects ist folgender:
- Die Schnittstellenschaltungen, die ursprünglich Datenübertragungen von der ersten Schaltmatrix 21 ausgewählt hatten, wählen nun die zweite Schaltmatrix 22 aus. Dies verursacht eine kurze Unterbrechung ("traffic hit") aufgrund der Umschaltung.
Im Falle, daß die erste Taktversorgungsschaltung 27 als Master, d.h. als aktive Taktversorgung, arbeitete, übernimmt die zweite Taktversorgungsschaltung 28 die Masterrolle. In der in Figur 2 gezeigten Konfiguration wurden alle zur Synchronisation verwendeten Referenztakte von Schnittstellenschaltungen 23 im ersten Raum abgeleitet. Daher tritt die zweite Taktversorgungsschaltung als neue aktive Taktversorgung in den "hold-over" Modus. Um dies zu vermeiden, ist es vorteilhaft, stets Schnittstellenschaltungen aus beiden Gruppen als mögliche Taktquellen auszuwählen.
- Alle Schaltungsteile ("Boards") des Crossconnects, die ursprünglich Copy A der Matrix als aktive Matrix ausgewählt hatten, wählen nun Copy B aus. Wie bereits erwähnt wird dadurch ein kurzer "traffic hit" verursacht.
- Der Status der zweiten Steuerungseinrichtung 26 bleibt wie er ist ("stand-by"). Alle Alarme und Meldungen werden nach wie vor auf der Festplatte der zweiten Steuerungseinrichtung 26 gespeichert.
- Aufgrund der Tatsache, daß das lokale Bedienterminal nicht mehr benutzbar ist, muß ein neues Bedienterminal an die zweite Steuerungseinrichtung angeschlossen werden um Kontrolle über den Crossconnect zurückzugewinnen. Dasselbe gilt für den Anschluß zum übergeordneten Netzwerkmanagementsystem. Im Falle, daß die erste Steuerungseinrichtung 25 vor dem Feuer aktiv war, muß die zweite Steuerungseinrichtung 26 nun auf den Status "Aktiv" gesetzt werden, bevor Zugriffe auf den Crossconnect möglich sind. Die Aktivitäten im Steuerungssystem beeinflussen jedoch die Datenübertragungen nicht.

Aus den Erläuterungen geht hervor, daß der Crossconnect zumindest was den im zweiten Raum ankommenden und gesendeten Verkehr betrifft vollständig betriebsbereit ist. Über das zentrale Netzwerkmanagementsystem kann der Verkehr im Netzwerk so umgeleitet werden, daß zumindest priorisierter Verkehr unbeinflußt von dem Feuer bleibt.

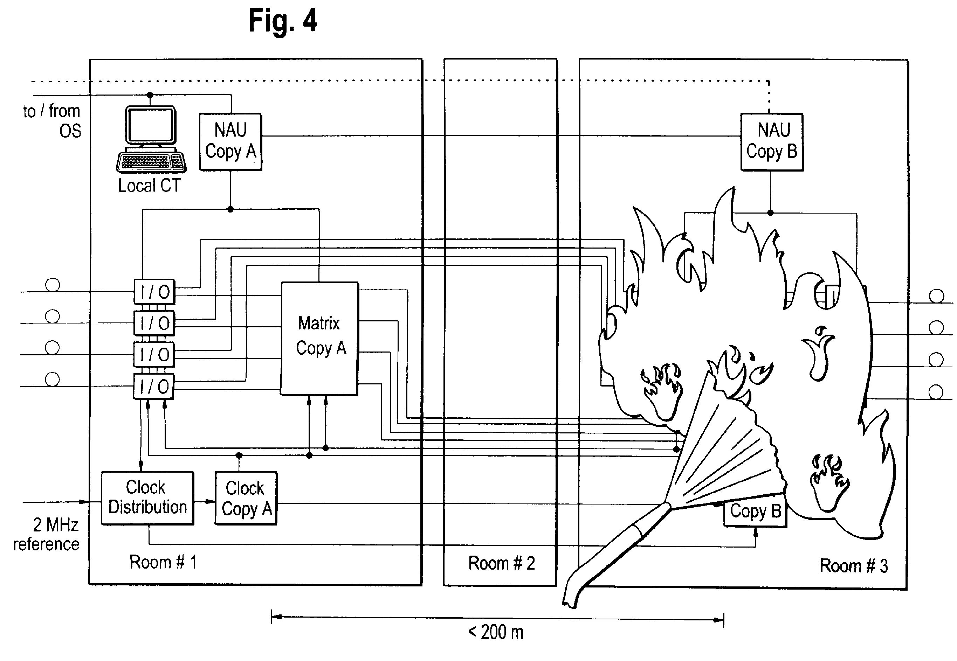

Figur 4 stellt dar, daß ein Feuer im zweiten Raum 32 alle darin aufgestellten Gerät zerstört. Da die im ersten Raum aufgestellten Komponeten des Crossconnects bereits aktiv waren, muß keine Umschaltung erfolgen. Hatten Komponenten des Crossconects vor dem Brand dennoch die zweite Schaltmatrix als aktive Matrix oder die zweite Taktversorgungsschaltung ausgewählt, so schalten sie nun auf die entsprechenden Gegenstücke um. Dies kann wie im vorigen Fall eine kurze Unterbrechung ("traffic hit") bewirken. Der Status der Steuerungseinrichtung bleibt wie er vor dem Brand war (hier: "Aktiv"). Alarme und Meldungen werden nach wie vor auf der Festplatte der ersten Steuerungseinrichtung gespeichert. Der Crossconnect kann weiterhin über das Bedienterminal 30 gesteuert werden.

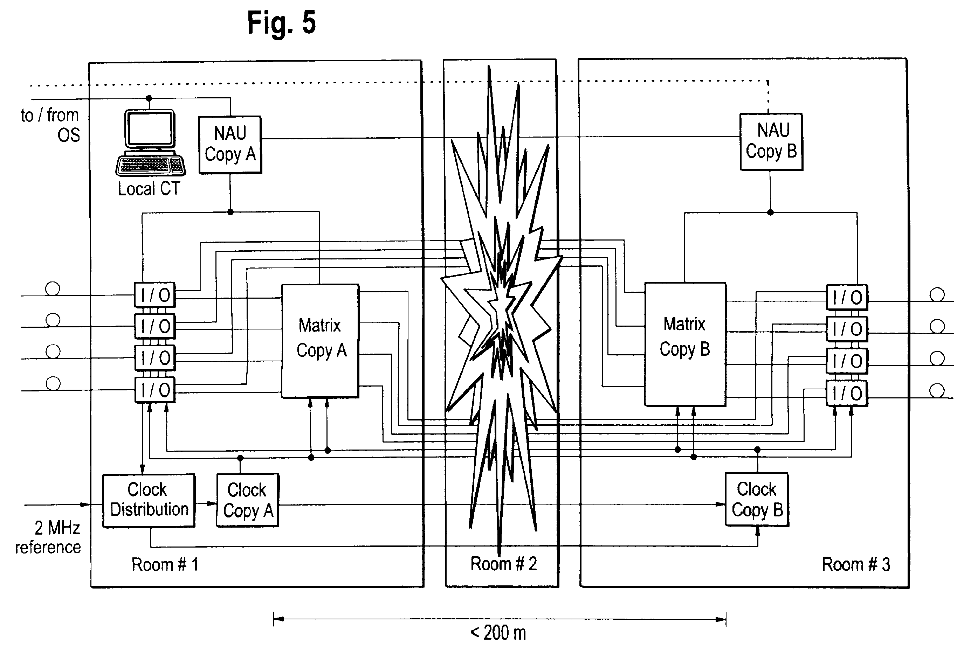

In Figur 5 ist dargestellt, daß eine Explosion die interne Verkabelung zwischen den beiden Einheiten des Crossconnects zerstört. Als Folge der Katastrophe geht der Verkehr, der im ersten Raum empfangen und im zweiten Raum gesendet wird verloren. Die Auswirkungen auf den verbleibenden Verkehr und die Steuerbarkeit des Crossconnects sind folgende:
- Schnittstellenschaltungen 23 der ersten Einheit, die die zweite Schaltmatrix 22 ausgewählt hatten, schalten auf die erste Schaltmatrix 21 um. Dadurch entsteht eine kurze Unterbrechung für Datenübertragungen über diese Schnittstellenschaltungen.
- Wenn die zweite Taktversorgungsschaltung 28 für die erste Einheit im ersten Raum die Mastertaktversorgung war, wird auf die erste Taktversorgungsschaltung 27 umgeschaltet.
- Der Status der ersten Steuerungseinrichtung 25 bleibt zunächst wie er war. Alarme und Meldungen von der ersten Einheit werden nach wie vor auf der Festplatte der ersten Steuerungseinrichtung 25 gespeichert. Wenn die zweite Steuerungseinrichtung zuvor die aktive war, muß der Status der ersten auf "Aktiv" umgeschaltet werden, bevor Zugriffe auf die erste Einheit des Crossconnects möglich sind. Danach kann die erste Einheit über das Bedienterminal gesteuert werden.
- Schnittstellenschaltungen 24 der zweiten Einheit, die die erste Schaltmatrix 21 ausgewählt hatten, schalten auf die zweite Schaltmatrix 22 um.
Dadurch entsteht eine kurze Unterbrechung für Datenübertragungen über diese Schnittstellenschaltungen.
- Wenn die erste Taktversorgungsschaltung 27 für die zweite Einheit im zweiten Raum die Mastertaktversorgung war, wird auf die zweite Taktversorgungsschaltung 28 umgeschaltet.
- Der Status der zweiten Steuerungseinrichtung 26 bleibt zunächst wie er war. Alarme und Meldungen von der zweiten Einheit werden nach wie vor auf der Festplatte der zweiten Steuerungseinrichtung 26 gespeichert. Um auf die zweite Einheit wieder zugreifen zu können, muß ein neues Bedienterminal an die zweite Steuerungseinrichtung angeschlossen werden oder die Verbindung zu der ersten Steuerungseinrichtung muß wiederhergestellt werden. Um mit einem neuen Bedienterminal auf die zweite Einheit zugreifen zu können, wird, wenn die erste Steuerungseinrichtung zuvor die aktive war, der Status der zweiten auf "Aktiv" umgeschaltet. Danach kann die zweite Einheit über das neue Bedienterminal gesteuert werden.

Die Funktion des Crossconnects bleibt somit trotz der Katastrophe weitgehend erhalten. Über das zentrale Netzwerkmanagementsystem kann priorisierter Verkehr, der aufgrund der Explosion nicht mehr von den Schnittstellenschaltungen der ersten Einheit zu denen der zweiten Einheit geschaltet werden kann, umgeleitet werden.

Auf diese Weise wird ein effizienter Schutz des Crossconnects erreicht, wobei wesentlich weniger Komponenten benötigt werden als im Falle von zwei baugleichen Geräten. Ein Vergleich mit Figur 1 macht dies deutlich. Durch diese Schutzmaßnahme wird ein Totalausfall des Crossconnects im Falle einer Katastrophe verhindert. Werden alle Geräte in einem Raum zerstört, so bleibt zumindest die Hälfte des Netzelementes betriebsbereit.

Der Übersicht halber wurde im Ausführungsbeispiel ein Crossconnect mit nur acht Schnittstellenschaltungen für STM-N Signale betrachtet. Übliche Crossconnects besitzen hingegen eine Kapazität von mehreren Hundert STM-1 Äquivalenten, die jedoch nach demselben Prinzip über die Matrix geschaltet werden.

Die Erfindung wurde anhand eines digitalen Crossconnect für ein SDH-System beschrieben. Sie ist jedoch auch auf andere Netzelemente wie Add/Drop-Multiplexer und in anderen Netzwerken wie z.B. bei SONET anwendbar.

## Patentansprüche

1. Netzelement für ein digitales Nachrichtenübertragungsnetz,
- mit einer Anzahl von Schnittstellenschaltungen (23, 24),
- mit einer ersten, aktiven Schaltmatrix (21), die mit den Schnittstellenschaltungen (23, 24) verbunden ist, zum Schalten von Pfaden zwischen den Schnittstellenschaltungen,
- mit einer zweiten, redundanten Schaltmatrix (22), die ebenfalls mit den Schnittstellenschaltungen (23, 24) verbunden ist und
- mit einer Steuerungseinrichtung (25) zum Erkennen einer Fehlerbedingung der aktiven Schaltmatrix (21) und zum Umschalten der redundanten Schaltmatrix (22) als neue aktive Schaltmatrix,
**dadurch gekennzeichnet,** daß
die Schnittstellenschaltungen (23, 24) in zwei Gruppen eingeteilt sind und daß die beiden Schaltmatrizen (21, 22) mit jeweils einer Gruppe der Schnittstellenschaltungen (23, 24) zu zwei getrennten Einheiten angeordnet sind, die durch interne Verbindungen (34) untereinander verbunden sind, wodurch die Einheiten in zwei getrennten Räumen (31, 32) installierbar sind.

2. Netzelement nach Anspruch 1, bei dem jeweils eine Schaltmatrix und eine Gruppe der Schnittstellenschaltungen als Einheit in einem Gestellrahmen angeordnet sind.

3. Netzelement nach Anspruch 1, bei dem die Schnittstellenschaltungen (23, 24) optische Schnittstellenschaltungen sind, die zum Anschluß von Lichtwellenleitern eines optischen Nachrichtenübertragungssystems vorgesehen sind.

4. Netzelement nach Anspruch 1 oder 3, bei dem die internen Verbindungen (34) kurzreichweitige optische Verbindungen sind, die für eine maximale Lichtwellenleiterlänge von etwa 200 Metern ausgelegt sind.

5. Netzelement nach Anspruch 1, bei dem die beiden Einheiten jeweils mit einer eigenen Taktversorgungsschaltung (27, 28) ausgestattet sind, wobei jeweils eine der Taktversorgungsschaltungen als aktive Taktversorgung arbeitet und die andere als Ersatzschaltung für einen Fehlerfall zur Verfügung steht.

6. Netzelement nach Anspruch 1, das zusätzlich eine zweite, redundante Steuerungseinrichtung (26) aufweist, bei dem je eine der Steuerungseinrichtungen (25, 26) einer der Einheiten räumlich zugeordnet sind und bei dem jeweils eine der Steuerungseinrichtungen (25, 26) als aktive Steuerungseinrichtung arbeitet und die andere als Ersatzschaltung für einen Fehlerfall zur Verfügung steht.
